Europäisches Patentamt

European Patent Office

Office européen des brevets

(11) Publication number: **0 140 841**
A 1

## (12) EUROPEAN PATENT APPLICATION

(21) Application number: **84830247.7**

(22) Date of filing: **06.09.84**

(51) Int. Cl.⁴: **A 47 J 31/54**, A 47 J 27/04

(30) Priority: **16.09.83 IT 2299983 U**

(43) Date of publication of application: **08.05.85**
**Bulletin 85/19**

(84) Designated Contracting States: **AT BE CH DE FR GB LI NL SE**

(71) Applicant: **Cavalli, Alfredo, Via G. Galilei, 9, I-20060 Pessano con Bornago (Milan) (IT)**

(72) Inventor: **Cavalli, Alfredo, Via G. Galilei, 9, I-20060 Pessano con Bornago (Milan) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) A steam delivery element, particularly intended to be fitted to coffee machines.

(57) A steam delivery element (2), which is particularly suitable for a coffee machine such as an expresso coffee maker, is formed as a flexible duct or a set of rigid articulated tubes (10) joined by ball joints (11) allowing the spout to be introduced into the mouth of any container of any size or shape without difficulty or inconvenience.

The embodiment incorporating a flexibe steam delivery duct may be suitably shielded to protect against leakages, and the rigid articulated embodiment may be provided with a compartment (12) with a door (13) allowing it to be stowed away when not in use.

- 1 -

**A Steam Delivery Element, Particularly Intended to be
Fitted to Coffee Machines**

The present invention relates to a steam delivery element, particularly one devised to be fitted to a coffee machine.

As is known, machines for making expresso coffee are generally provided with a steam delivery spout, supplied from the boiler, which is constituted by a small rigid tube which extends out from the machine and projects downwardly.

This type of arrangement, above all in coffee machines of domestic type, is in many cases inconvenient in that it does not allow an easy utilisation of the spout. In fact, when it is desired to introduce steam into receptacles of relatively tall dimension, such as jugs and the like, it is necessary in order to be able to introduce the spout into the jug, to tilt the jug excessively, with the possibility of upsetting the contents and with an awkward and uncomfortable position which does not allow a rapid execution of the operation. Another disadvantage, due to the known arrangement, is constituted by the fact that the rigid spout cannot be used in all those cases in which the particular shape of the container does not offer the possibility of introducing the conventional rigid spout into its interior.

The present invention proposes to eliminate the previously discussed disadvantages by providing a steam delivery element, particularly devised to be fitted to coffee machines and above all, coffee machines of the domestic type, which offers the possibility of being introducible into any type of container without having to tilt the container in order to introduce the steam delivery spout into this latter.

Within the scope of the above object, a particular object of the invention is that of providing a steam delivery element which can be fitted to a coffee machine, and which offers the possibility of being usable in all conditions, thus significantly increasing the versatility of the coffee machine itself.

The present steam delivery element is particularly convenient and offers the widest guarantees of reliability and safety in use.

A further object of the present invention is that of providing a steam delivery element which is easily produced using elements of common commercially available material and which, moreover, is competitive from an economic point of view.

The above described object, as well as the objects listed and others which will become more apparent below, are achieved by an element for the distribution of steam, particularly one devised to be fitted to a coffee machine, according to the invention, including a steam delivery duct in communication with the boiler of a coffee machine and characterised by the fact that the said steam delivery duct has an outlet which can be displaced with respect to a coffee machine to which the duct is fitted.

Further characteristics and advantages of the subject of the present invention will become more apparent from a study of the detailed description of an element for the distribution of steam, particularly devised to be fitted to a coffee machine, illustrated by way of indicative and non-limitative example, with the aid of the attached drawings, in which:

Figure 1 shows an element for the distribution of steam, according to the invention, fitted to a coffee machine;

Figure 2 shows a detail of a steam delivery element of articulated type.

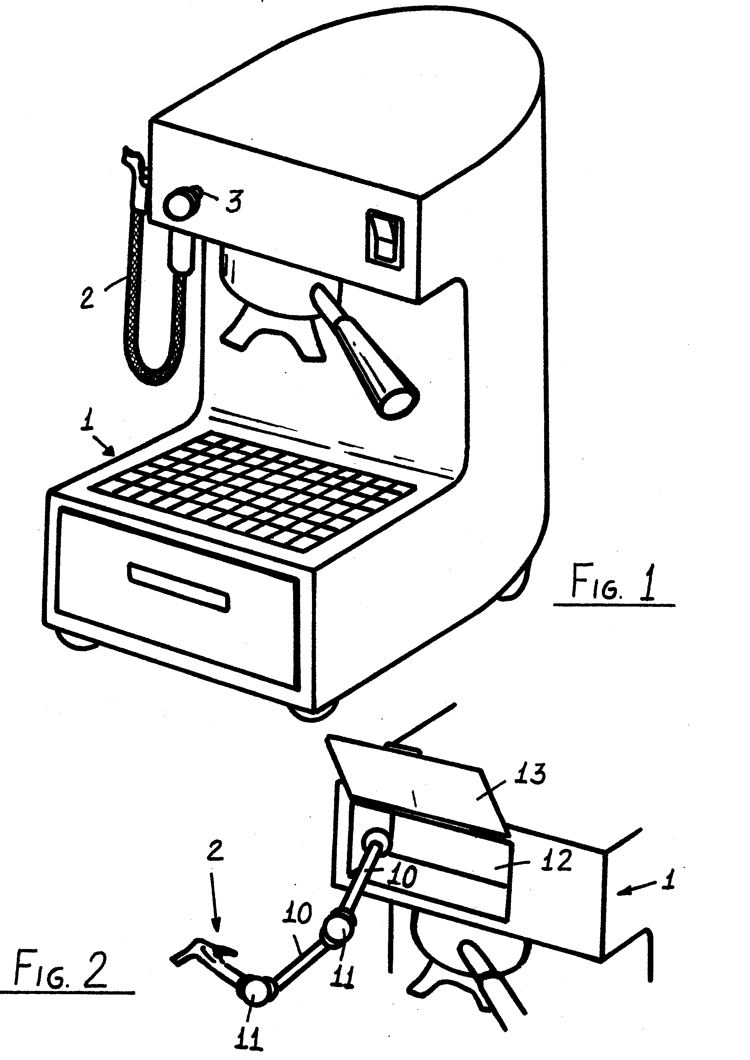

With particular reference to the reference numerals in the attached drawings, in Figure 1 there is illustrated a domestic coffee machine, which is generally indicated with the reference numeral 1 and which has in its upper part a duct 2 for the delivery of steam, which is in communication with the water supply boiler, not illustrated in the drawing.

In the region of connection to the machine 1 of the steam delivery duct 2 there is provided a tap or operating

0140841

- 4 -

handle 3 which controls the delivery of steam and which
can be operated to obtain the delivery from it.

The essential peculiarity of the invention is constituted
by the fact that the steam delivery duct 2 is of flexible
type such that it can easily and rapidly be introduced
into any type of container without having problems of
any type in introducing the container beneath the delivery
spout as took place in the conventional arrangement.

Advantageously the flexible duct 2 is made of suitable
materials able to resist the temperature of the steam,
and it is advantageously screened to avoid any unwanted
escape of steam.

With particular reference to Figure 2, the steam delivery
duct is constituted by a plurality of sections, schematically indicated 10, which are connected to the machine 1
and connected together by means of ball joint elements
11 which allow the individual sections to be folded up
with respect to one another whilst maintaining fluid
communication.

Advantageously, one of the ball joints 11, which connects
the various sections 10, is made in such a way that it
itself constitutes a tap for delivery of steam.

Preferably, but not necessarily, the ball joint 11 which
incorporates the steam delivery tap and which is simply
operable by varying the inclination in a suitable way, is fitted to the end section.

According to a preferred arrangement the coffee machine 1 can have a compartment 12 which can be closed by means of a door 13 into which the articulated duct can easily be introduced in such a way that it does not create awkward projections on the outside of the machine when it is not in use.

In use it is extremely quick and easy to withdraw the duct for delivery of steam, which can be disposed in such a way as to assume the most suitable disposition in any specific case, thanks to the presence of the ball joints 11.

From what has been described above it is therefore seen how the invention achieves the stated . objects.

In particular, it is desired to underline that the inventive idea which is manifested in having provided a steam distribution duct which has a shape which can be varied in any way allows any type of container to be approached with the steam distribution duct without having to face the problems which are normally encountered with rigid steam delivery ducts.

Moreover, another important characteristic is constituted by the fact that the handle or tap for operating and control of the steam delivery duct may be arranged directly within the duct itself in such a way as to allow an easy control of the steam.

In practice, the materials used, as long as they are compatible with the specific use, as well as the dimensions and corresponding shapes, can be any suitable according to the various requirements.

Claims:

1. A steam delivery element (2), particularly adapted for fitting to a coffee machine (1), comprising a duct for the delivery of steam, adapted to be put in communication with the boiler of a coffeee machine, characterised by the fact that the said steam delivery duct has an outlet which can be displaced with respect to a coffee machine to which the duct is fitted.

2. A steam delivery element (2) particularly adapted to be fitted to a coffee machine, according to the preceding claim, characterised by the fact that it includes a knob or tap (3) for the control of the delivery of steam in such duct.

3. A steam delivery element (2) particularly adapted to be fitted to a coffee machine, characterised by the fact that the said duct (2) is flexible.

4. A steam delivery element (2) particularly adapted to be fitted to a coffee machine, according to the preceding claims, characterised by the fact that the said duct (2) for delivery of steam is constituted by a plurality of rigid sections (10) connected together and articulated by means of ball joints (11).

5. A steam delivery element (2) particularly adapted to be fitted to a coffee machine, according to Claim 4, characterised by the fact that one of the ball joints (11) can be formed as the tap for control of the steam delivery.

6.   A coffee machine characterised by the fact that it has a steam delivery element (2) according to any of claims 1 to 5.

7.   A coffee machine according to Claim 6, characterised by the fact that it includes, on the frame of the coffee machine (1), a compartment (12) for removably housing this steam delivery duct (2).

8.   A coffee machine according to Claim 7, characterised by the fact that the said compartment (12) is closable by means of a door (13).

0140841

Fig. 1

Fig. 2

## EUROPEAN SEARCH REPORT

European Patent
Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-    8 214   (SANDERSON) (A.D. 1910) * whole document * | 1-3 | A 47 J   31/54 A 47 J   27/04 |
| X | US-A-1 536 094  (HADAWAY) * whole document * | 1-3 | |
| X | CH-A-  219 091   (BRENNER) * page 2, lines 17-23; figure 1 * | 1-3 | |
| X | FR-A-  411 755  (GONELLA & SACERDOTE) * whole document * | 1-3 | |
| X | GB-A-  895 848   (KERR) * whole document * | 1,2 | **TECHNICAL FIELDS SEARCHED (Int. Cl.4)** |
| X | FR-A-  743 482   (CARTON) * page 2, lines 42-52; figure 1 * | 1,2,6 | A 47 J F 22 B |
| A | US-A-4 287 817  (MOSKOWITZ) | | |
| A | FR-A-  970 491   (MINIMAX) | | |

The present search report has been drawn up for all claims

| Place of search THE HAGUE | Date of completion of the search 07-12-1984 | Examiner SCHARTZ J. |
|---|---|---|